(19) **Europäisches Patentamt European Patent Office Office européen des brevets**

(11) **EP 4 017 271 B1**

(12) **EUROPEAN PATENT SPECIFICATION**

(45) Date of publication and mention of the grant of the patent:
**08.03.2023  Bulletin 2023/10**

(21) Application number: **20756867.6**

(22) Date of filing: **18.08.2020**

(51) International Patent Classification (IPC):
*A23G 9/16* *(2006.01)*        *A23G 9/38* *(2006.01)*

(52) Cooperative Patent Classification (CPC):
(C-Sets available)
**A23G 9/38; A23G 9/166;** A23V 2002/00     (Cont.)

(86) International application number:
**PCT/EP2020/073131**

(87) International publication number:
**WO 2021/032755 (25.02.2021 Gazette 2021/08)**

(54) **FROZEN CONFECTION**

GEFRORENES KONFEKT

CONFISERIE SURGELÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **22.08.2019  EP 19193150**

(43) Date of publication of application:
**29.06.2022  Bulletin 2022/26**

(73) Proprietor: **Unilever IP Holdings B.V.**
**3013 AL Rotterdam (NL)**

(72) Inventors:
- **BENT, Julian, Francis**
  **Sharnbrook Bedford Bedfordshire MK44 1LQ (GB)**
- **FRITH, William, James**
  **Sharnbrook Bedford Bedfordshire MK44 1LQ (GB)**
- **NEVILLE, Michelle, Elizabeth**
  **Sharnbrook Bedford Bedfordshire MK44 1LQ (GB)**

(74) Representative: **Askew, Sarah Elizabeth**
**Unilever Patent Group**
**Bronland 14**
**6708 WH Wageningen (NL)**

(56) References cited:
**EP-A1- 2 161 029        CN-A- 101 416 677**
**CN-A- 107 028 193      CN-B- 102 870 951**
**US-B1- 6 299 914**

- **DATABASE WPI Week 201959 Thomson Scientific, London, GB; AN 2019-62395F XP002797747, & BR 1020 1702 6823 A2 (GOMES E J) 25 June 2019 (2019-06-25)**

(52) Cooperative Patent Classification (CPC): (Cont.)

C-Sets
A23V 2002/00, A23V 2250/06, A23V 2250/064,
A23V 2250/242, A23V 2250/506, A23V 2250/5114,
A23V 2250/628

**Description**

**Field of the invention**

The present invention relates to frozen confections, in particular frozen confections having enhanced extrudability.

**Background of the invention**

Frozen confection manufacture, such as that for ice cream, involves the steps of: mix preparation; pasteurization and homogenization; ageing; freezing; and hardening.

The first step is the preparation of the mix. The mixing process is designed to blend together, disperse and hydrate the ingredients in the minimum time with optimal energy usage.

The mix is then pasteurized to reduce the number of viable micro-organisms to a level that is safe for human consumption, and homogenized to break any fat particles down into small droplets.

In the homogenizer the hot mix (>70°C) is forced through a small valve under high pressure. Large fat droplets are elongated and broken up into a fine emulsion of much smaller droplets, greatly increasing the surface area. A second homogenization step may be used with a lower pressure to reduce clustering of the small fat droplets after the first stage.

Pasteurization may also take place in the holding tube, a length of pipe from the homogenizer outlet whose length and diameter are chosen to ensure that the mix is held at the pasteurizing temperature for the required time.

After pasteurization the mix is cooled then aged, during which emulsifiers adsorb to the surface of any droplets and any fat inside the droplets begins to crystallize. Fat crystals may protrude through the droplet surface and it is essential that ageing is long enough for crystallization to occur and for emulsifiers to displace some of the protein since both of these processes are important precursors to the next stage in ice cream production. Freezing typically occurs using scraped surface heat exchangers designed to remove heat from the viscous liquid of the mix. Refrigerant flows through a jacket and cools the outside of the barrel as it evaporates. Inside the barrel is a rotating dasher driven by a motor. The dasher is equipped with scraper blades that fit closely inside the barrel. The dasher subjects the mix to high shear and scrapes of the layer of ice crystals that forms on the barrel wall.

The mix at approximately 4°C is pumped from the ageing tank into the freezer, where it is aerated and frozen before being pumped out from the other end. Air can be injected into the barrel of the freezer where it initially forms large bubbles.

Whilst the mix is aerated, it is simultaneously frozen. Heat must be extracted from the mix both to cool it down (the sensible heat) and to freeze water into ice (the latent heat). Approximately five times more heat must be removed to freeze the water than to cool the mix down. As the mix passes along the barrel, its temperature decreases and its ice content increases. This causes the viscosity of the mix to increase: the viscosity of the sugar solution increases as the temperature decreases and the viscosity of the suspension increases as the volume fraction of ice increases.

The frozen mix is extruded from the freezer at a temperature of approximately -5°C and the manufacture of standard frozen confections therefore demands significant amounts of energy to move the product during the scraped surface freezing of the products and the subsequent extrusion under pressure at -5°C.

After extrusion, the temperature of the product is lowered as quickly as possible after it leaves the freezer. This is known as hardening. Products are usually hardened in a hardening tunnel, an enclosed chamber into which the frozen confections pass on a conveyor belt from the freezer. Inside, cold air (typically -30 to -45°C) is blown over the products which are then stored in cold stores at about -25°C before being distributed in a cold chain at approximately the same temperature before storage at the point of sale in freezers at approximately -18°C.

There remains a need to optimize the viscosity of the frozen confection mix during freezing in order to enhance the efficiency of the manufacturing process and facilitate the industrial manufacture of frozen confections. Nevertheless, this must be achieved without negatively impacting the organoleptic properties of the final product.

Amino acids are not a typical ingredient of ice cream. US 6,299,914 discloses calcium amino acid chelate complexes for fortification of dairy products and oleaginous foods. Examples 12 and 13 describe a low-fat frozen yogurt and an ice cream, respectively. Each of these products is fortified with a calcium amino acid chelate complex which has an amino acid to calcium ratio of about 1:1. CN 101 416 677 discloses Frozen beverage comprising soy peptides, viscosity is discussed.

**Summary of the invention**

The invention is defined by the claims.

We have found that incorporating certain amino acids into frozen confections can improve their extrudability and hence enhance the efficiency of the manufacturing process for such products. Moreover, this can be achieved in combination with a reduction or even a total replacement of the sugars normally present in the frozen confections. Therefore, the present invention relates to a frozen confection comprising:

- sugars in a total amount S, wherein S is less than 21 wt%; and
- amino acid monomers and dipeptides selected from alanine, glycine, lysine, proline, serine and glycine-glycine dipeptide in a total amount A, wherein A is at least 0.75 wt%.

**Detailed description of the invention**

The present invention relates to a frozen confection. As used herein the term frozen confection means a confection intended for consumption in the frozen state (i.e. where the temperature of the confection is less than 0°C, and preferably wherein the confection comprises significant amounts of ice). Examples of frozen confections include ice creams, sherbets, sorbets, granitas, and water ices.

Ice cream includes both dairy and non-dairy products. Sherbet means frozen dairy desserts that are low in milk ingredients, high in sugar and slightly acidified. Sorbet (or sorbetto) refers to products similar in composition to sherbets, but excluding dairy ingredients. Sorbets may contain fruit and/or fruit juice, and may be stabilised with egg white, pectin, or other gum stabilisers. Granita means a water ice containing sugar, water and flavours. Granitas are similar to sorbets, but are frozen with very little agitation leading to a coarser texture with larger ice crystals. Water ices (sometimes simply known as ices) are products made of fruit juice, sweetener and stabiliser (with or without additional fruit acid, flavouring, colour and/or water) that are frozen with or without agitation, and typically do not contain dairy or egg ingredients (other than optionally egg white).

Definitions and descriptions of various terms and techniques used in frozen confection manufacture are found in Ice Cream by H. Douglas Goff and Richard W. Hartel (2013, 7th Edition, Kluwer Academic/Plenum Publishers). All percentages contained herein are calculated by weight (unless otherwise indicated), with the exception of percentages cited in relation to overrun.

Preferably the frozen confection is a dairy ice cream, a non-dairy ice cream, or a water ice.

Where the frozen confection is a dairy ice cream it will comprise milk protein. Any source of milk protein may be used, for example skimmed milk powder, whole milk powder, whey protein, processed soluble caseinate (such as sodium casinate), or a mixture thereof. Most preferably the source of milk protein is skimmed milk powder.

Where the frozen confection is a non-dairy ice cream it will comprise plant protein. Any source of plant protein may be used, for example pulse protein, cereal protein, or a mixture thereof. Pulse proteins include pea protein, lentil protein, bean protein, lupin protein, soy protein, and mixtures thereof. Cereal proteins include oat protein, wheat protein, rye protein, barley protein, rice protein, buckwheat protein, millet protein and mixtures thereof. Preferably the plant protein comprises pea protein, oat protein, soy protein, or a mixture thereof.

Where the frozen confection is a water ice, it may comprise fruit juice and/or edible acid (such as citric acid).

The frozen confection comprises amino acids selected from alanine, glycine, lysine, proline, serine and glycine-glycine dipeptide in a total amount $A$, wherein $A$ is at least 0.75 wt%. Preferably $A$ is 1 wt% to 20 wt%, more preferably 2 wt% to 15 wt%.

As used herein, "amino acids" refers to amino acid monomers and dipeptides. It does not include peptides which have a chain length of three or more amino acids, nor does it encompass polypeptides or proteins. The amino acid may be incorporated in the frozen confection as a free amino acid or in the form of a salt. However, where an amino acid salt is used, it is only the contribution of amino acid that is included when calculating $A$. For example, 1 g of lysine HCl provides 0.8 g of lysine, since lysine HCl is 80 wt% lysine and 20 wt% HCl.

The frozen confection comprises at least one amino acid selected from: alanine, glycine, lysine, proline, serine and glycine-glycine dipeptide.

Without wishing to be bound by theory, the inventors believe that these amino acids have a positive influence on extrudability because they are in solution at the temperature of the frozen confection. Preferably the frozen confection comprises at least one amino acid selected from arginine, lysine and proline. More preferably the frozen confection comprises proline. Preferably the amount $A$ is the total amount of alanine, glycine, lysine, proline, serine and glycine-glycine dipeptide in the frozen confection (i.e. these are preferably the only amino acids added to the frozen confection, or even the total amount of arginine, lysine and proline in the frozen confection. Most preferably the amount $A$ is the total amount of proline in the frozen confection.

The frozen confection comprises sugars in a total amount $S$, wherein $S$ is less than 21 wt%. The incorporation of certain amino acids into frozen confections can improve their extrudability in combination with a reduction or even total replacement of sugar. As such it is preferred that $S$ is less than 20 wt%, less than 19 wt%, less than 18 wt%, or even less than 15 wt%.

Sugars are used in almost all types of frozen confection and have two major functions: delivering sweetness and controlling the amount of ice. As used herein the term "sugars" includes monosaccharides, disaccharides and oligosaccharides (which are formed from 3 to 10 monosaccharide units). Monosaccharides include glucose, fructose, galactose and mannose. Disaccharides include sucrose, lactose and trehalose. Oligosaccharides include raffinose. The term "sugars" does not include polysaccharides, which comprise >10 monosaccharides.

Other ingredients commonly included in frozen confections may contribute to the total sugar content $S$. For example, the contribution of the lactose present in skimmed milk powder will be included, as will the fructose present in any fruit juice/fruit concentrate. Corn syrup (sometimes called glucose syrup) - a mixture of monosaccharides, disaccharides and oligosaccharides - is included in the total sugar content $S$. However, the total sugar content $S$ does not include maltodextrin (a mixture of polysaccharides).

It is possible for $S$ to be 0 wt% if an alternative sweetener is present in the frozen confection (e.g. a non-nutritive sweetener, such as aspartame, acesulfame K, erythritol, or one or more steviol glycosides such as rebaudioside A). However, this is not usually preferred, and usually $S$ will be at least 3 wt%, preferably at least 4 wt% or even at least 5 wt%.

As a general rule, the inventors believe that sugar removal can be balanced by increasing the amino acid content of the frozen confection. This is thought to allow improved extrudability of the frozen confection, without compromising the overall physicochemical and/or organoleptic properties of the frozen confection that are favoured by consumers. As such, it is preferred that the combined amount of sugars and amino acids $S + A$ in the frozen confection is 5 wt% to 23 wt%, preferably 7 wt% to 22 wt%, or even 8 wt% to 21 wt%.

The term aeration or aerated means that gas has been intentionally incorporated into the frozen confection premix, for example by mechanical means. The gas can be any gas, but is preferably, in the context of frozen confections, a food-grade gas such as air, nitrogen, nitrous oxide, or carbon dioxide. Hence the term aeration is not limited to aeration using air. The extent of aeration is measured in terms of 'overrun' (with unit '%'), which is defined as:

$$overrun = \frac{\text{volume of aerated product - volume of initial mix}}{\text{Volume of initial mix}} \times 100\%$$

Preferably the frozen confection has an overrun of from 10% to 200%. More preferably the frozen confection has an overrun of 20% to 190%, 30% to 180%, 40% to 170%, 50% to 160%, 60% to 150%, 70% to 140%, 80% to 130, or even 90% to 120%.

The frozen confections of the present invention can be manufactured by any suitable method.

Modern industrial ice cream freezers are scraped surface heat exchangers which remove heat from viscous liquids. Ice cream freezers typically consist of a cylindrical barrel and a refrigerant, normally a liquefied volatile gas such as ammonia or freon, that flows through a jacket and cools the outside of the barrel as it evaporates. Inside the barrel is a rotating stainless steel dasher driven by an electric motor. The dasher is equipped with scraper blades that fit very closely inside the barrel. The dasher subjects the mix to high shear and scrapes off the layer of ice crystals that forms on the barrel wall.

Dashers can be open and closed and are used for different types of product. Open dashers have an open cage supporting the scraper blades, within which is a passively rotating whipper. The dasher occupies 20 to 30% of the volume of the barrel. Closed dashers have a solid core, and occupy approximately 80% of the volume. Open dashers give lower shear and longer residence times than closed ones for the same outlet temperature and throughput. Open dashers are generally used for frozen confection production. Ice cream mix at approximately 4°C is pumped from the ageing tank into the barrel, where it is aerated and frozen before being pumped out from the other end. The operation of the factory freezer is controlled by a number of parameters. The refrigerant pressure sets the temperature at which it evaporates, and hence the wall temperature (typically -30°C). The mix and air in-flow and ice cream out-flow rates determine the time that the mix spends inside the barrel (known as the residence time), the overrun, the pressure inside the barrel (typically 5 atmospheres) and the throughput (which can be as much as 3000 litres per hour in a large industrial freezer). All of these, together with the dasher rotation speed (typically 200 rpm), determine the outlet temperature. The beating of the dasher shears the large air bubbles and breaks them down into many smaller ones. Whilst the mix is aerated, it is simultaneously frozen.

Approximately five times more heat must be removed to freeze the water than to cool the mix down. As the mix passes along the barrel, its temperature decreases and its ice content increases. Both of these cause the viscosity of the mix to increase: the viscosity of the sugar solution decreases as the temperature decreases and the viscosity of the suspension increases as the volume fraction of ice increases. The ice content of a typical formulation is 35% when it leaves the factory freezer at -5°C and 54% at a typical storage temperature of -18°C. The increase in the viscosity due to ice formation begins about one third of the distance along the barrel. Increasing the viscosity means that the mix becomes increasingly hard to beat and much more energy input is required to rotate the dasher and to move the product through the freezer. This extra energy is dissipated in the mix as heat, which must be removed and there comes a point when the energy input through the dasher equals the energy removed as heat by the refrigerant, i.e. the process becomes self-limiting. For this reason, the lowest outlet temperature which can be achieved in a conventional ice cream freezer is about -5°C to -6°C, and about half of the cooling capacity is used to remove heat generated in this way.

There is therefore a need to manage the viscosity in the scraped surface heat exchanger to address this issue without impacting on the organoleptic acceptability of the final product.

Water ices can be produced using the ice cream process, but since they usually do not contain fat and often are not aerated, some steps are missed out. The ingredients are dosed and mixed, and the mix is then pasteurized. Homogenization and ageing are unnecessary, because of the absence of fat. The mix is frozen in the factory freezer, usually without the injection of air. In water ice mixes, the ice phase volume changes rapidly with temperature. Therefore, a small fluctuation in temperature can cause a large change in ice phase volume. If the amount of ice becomes too high, it can form large solid lumps in the barrel, which can damage the scraper blades, prevent the dasher from rotating and cause the motor to burn out. This is known as icing up. Using an open dasher, and hence a large volume of mix, gives a buffer against such fluctuations and reduces the likelihood of icing up. For aerated water ice products, such as sorbets, a barrel pressure of 2 to 3 atmospheres is used to achieve the required overrun. On exit from the factory freezer, a water ice slush is produced, with an ice phase volume that is determined by the outlet temperature. The size and shape of the ice crystals are similar to those in ice cream.

The present inventors have discovered that through the use of certain amino acids and the careful control of the sugar content of the formulation of a frozen confection, a mix can be provided that has improved viscosity allowing it to be processed more efficiently in the scraped surface heat exchanger. The composition is easier to extrude during manufacture, and provides these benefits without impacting on the organoleptic acceptability of the final product.

Unless otherwise specified, numerical ranges expressed in the format "from x to y" are understood to include x and y, and in specifying any range of values or amounts, any particular upper value or amount can be associated with any particular lower value or amount.

Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

## Figures

The cartridge that was used in the extrudability assessments described in the Examples is illustrated in the Figures, in which:

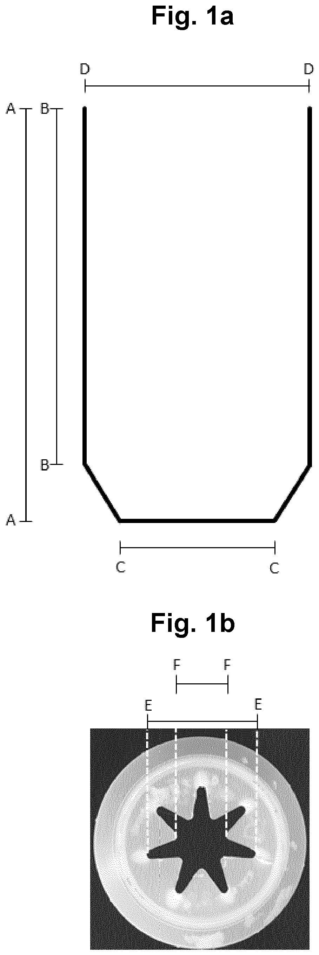

Figure 1a is a cross-sectional view of the cartridge; and
Figure 1b is a view of the bottom of the cartridge (with regard to the orientation shown in Figure 1a).

Figure 1a shows the cartridge used in the extrudability assessment in cross section. The total length of the cartridge A-A was 97 mm. The length B-B was 90 mm (this is the length from the top of the cartridge to the point at which the begins to taper towards the aperture). The end of the cartridge comprising the aperture was 36 mm in diameter (C-C) and the internal diameter of the main body of the cartridge was 52 mm (D-D). When filled, a plunging body with a shape corresponding to the tapered portion of the cartridge was inserted into the top of the cartridge. Upon actuation, the plunging body forced the ice cream out of the aperture shown in Figure 1b. The aperture is located at the bottom of the cartridge as orientated in Figure 1a. The aperture has the shape of a regular seven-pointed star, in which E-E is 25 mm and F-F is 9 mm.

## Examples

The following examples are intended to illustrate the invention and are not intended to limit the invention to those examples *per se.*

*Ingredients*

Ingredients (and suppliers) used in the examples were as follows:

- Skimmed milk powder (SMP) (*Dairy Crest*)
- Pea protein (Nutralys S85F - *Roquette*)
- Oat protein (PrOatein® - *Tate* & *Lyle*)
- Coconut oil *(Cargill Inc)*
- Proline (*Hellenia*)
- Alanine (*Bulk Powders*)
- Serine (Ajinomoto)

- Glycine (*Bulk Powders*)
- Lysine HCl (*Hellenia*)
- Glycine-Glycine dipeptide (*Bachem*)
- Sucrose (*British Sugar*)
- Corn syrup (DE 28) (*Cargill Inc*)
- 2 DE maltodextrin (2 DE MD) (*Cargill Inc*)
- 7-10 DE maltodextrin (7-10 DE MD) (*Cargill Inc*)
- 6-19 DE maltodextrin (16-19 DE MD) (*Cargill Inc*)
- Acesulfame potassium (Ace K) (*Nutrinova*)
- Locust bean gum (LBG) (*Danisco*)
- Guar gum (*Danisco*)
- Kappa-carrageenan (*CP Kelco*)
- HP60 (*Danisco*)
- HP70 (PS-222) (*Danisco*)
- Citric acid (*Jungbunzlauer Austria AG*)
- Cocoa powder (*Barry Callebaut*)
- Orange flavour (*Foodie Flavours*)
- Vanilla flavours (*Symrise*)
- Lemon flavour (*Foodie Flavours*)

*Ice content*

A μRC reaction calorimeter (Thermal Hazard Technology) was used to assess the ice content of each sample prior to extrusion testing. 200 μl of ice cream premix was loaded into samples cells and placed in the calorimeter. Samples were run against an empty sample cell. Samples were cooled from +20°C to -20°C at a rate of 2°C/min and held at -20°C for 20 min. Samples were then warmed to +20°C at a rate of 0.5°C/min, and the endothermic peak of ice melting recorded. The μRC analysis software was used to determine the area under the endothermic peak, and the ice content calculated.

*Extrudability assessment*

The cartridge used in the extrudability assessments is illustrated in Figure 1, and the dimensions of the cartridge are as described above.

Filled cartridges were held at a temperature of -5°C during the assessment. An Instron 5500 with an Instron 3116-005 temperature controlled test chamber was used. The chamber was fitted with an adaptor to house the cartridge (the adaptor was pre-cooled to -5°C). A filled cartridge was placed in the chamber. The Intron plunger was lined up against the lid of the cartridge (the lid of the cartridge was shaped to correspond to the tapered portion of the cartridge). During the test, the samples was extruded from the cartridge at a speed of 500 mm/min. Samples was extruded for 8 seconds, and the load required to extrude the samples was measured. Each sample was tested 5 times.

Example 1

Chocolate ice creams were made according to the formulations in Table 1. The specified total sugar content (**S**) includes the contribution of SMP (52% lactose) and cocoa powder (0.18% sugars), together with sucrose and DE 28 (a mixture of monosaccharides, disaccharides and oligosaccharides); it does not include the maltodextrin (a mixture of polysaccharides).

*Process*

The formulations were produced as 2 litre mixes according to the following method. Water at 80°C was added to a container and pre-blended sugars, amino acids (where present), stabilisers and emulsifiers were added to the water with mixing at 250 rpm for 2 min (using an overhead stirrer with pitch blade impeller; IKA Eurostar digital, Euro-ST D S2). The mixing speed was then increased to 450 rpm and the skimmed milk powder, cocoa powder and coconut oil were added (with approximately 1 min stirring between each ingredient). Further mixing at 500 rpm for 10 min was carried out, after which the temperature was raised to 79°C for 2 seconds to pasteurise the mix. Water loss due to evaporation was determined, and any water lost was replaced with the equivalent amount of boiling water which was added and mixed in with a spoon.

Table 1: chocolate ice cream formulations

| Ingredient (wt%) | Sample | | | | | | | |
|---|---|---|---|---|---|---|---|---|
| | B | 1 | 2 | 3 | 4 | 5 | 6 | 7 |
| Coconut oil | 8 | 8 | 8 | 8 | 8 | 8 | 8 | 8 |
| SMP | 10 | 10 | 10 | 10 | 10 | 10 | 10 | 10 |
| Sucrose | 11 | 10.4 | 9.8 | 9.2 | 8.6 | 8 | - | 5.5 |
| Ace K | - | - | - | - | - | - | - | 0.015 |
| DE 28 | 5 | 4.5 | 4 | 3.5 | 3 | 2.5 | - | 2.5 |
| 16-19 DE MD | 1 | 1 | 1 | 1 | 1 | 1 | 1 | - |
| 2 DE MD | - | - | - | - | - | - | - | 1 |
| Proline | - | 1 | 2 | 3 | 4 | 5 | 10 | 5 |
| LBG | 0.15 | 0.15 | 0.15 | 0.15 | 0.15 | 0.15 | 0.15 | 0.15 |
| Guar gum | 0.15 | 0.15 | 0.15 | 0.15 | 0.15 | 0.15 | 0.15 | 0.15 |
| HP60 | 0.15 | 0.15 | 0.15 | 0.15 | 0.15 | 0.15 | 0.15 | 0.15 |
| HP70 (PS-222) | 0.15 | 0.15 | 0.15 | 0.15 | 0.15 | 0.15 | 0.15 | 0.15 |
| Cocoa powder | 6 | 6 | 6 | 6 | 6 | 6 | 6 | 6 |
| Water | 58.4 | 58.5 | 58.6 | 58.7 | 58.8 | 58.9 | 64.4 | 61.385 |
| TOTAL | 100 | 100 | 100 | 100 | 100 | 100 | 100 | 100 |
| Total sugars ($S$) | 21.21 | 20.11 | 19.01 | 17.91 | 16.81 | 15.71 | 5.21 | 13.21 |
| Amino acid ($A$) | 0 | 1 | 2 | 3 | 4 | 5 | 10 | 5 |

The resultant mix was homogenised using a two-stage bench top homogeniser. The first stage was at 450 bar and the second stage at 50 bar. The homogenised mix was then cooled in a fridge for about 12 hours, before being frozen for 20 minutes in a Taylor 104 benchtop scraped surface freezer with an overrun of approximately 30%. The frozen mixture was extruded into the cartridges at a temperature of -3°C. The filled cartridges (each containing 145 ml ice cream) were placed in a blast freezer at -30°C for 2 hours, and then transferred to a storage freezer operating at -20°C.

*Ice content*

The ice content of the samples was determined according to the method set out above. All samples had an ice content of 59% ±1 at -20°C.

*Extrudability assessment*

Samples were removed from the storage freezer and placed in a Weiss cabinet at -5°C for 12 hours prior to the extrudability assessment. Filled cartridges were also held at a temperature of -5°C during the assessment to ensure that the ice cream was at the extrusion temperature of a typical scraped surface heat exchanger.
The procedure described above was followed, and the following ice cream samples were tested: Sample B ($A$ = 0 wt%), Sample 2 ($A$ = 2 wt%), Sample 3 ($A$ = 3 wt%), Sample 5 ($A$ = 5 wt%) and Sample 6 ($A$ = 10 wt%). The average loads (and standard deviations) are shown in Table 2. The data indicates that the presence of amino acids (in this case proline) results in a dramatic improvement in the extrudability of the ice cream.

Table 2: results of extrudability assessments

| Sample | Average load (N) | SD |
|---|---|---|
| B | 61.96 | 6.36 |
| 2 | 39.50 | 4.42 |

(continued)

| Sample | Average load (N) | SD |
|---|---|---|
| 3 | 26.20 | 3.45 |
| 5 | 27.15 | 2.93 |
| 6 | 29.16 | 3.37 |

*Further physical assessments*

Ice cream samples (Sample B, Sample 2, Sample 3, Sample 5 and Sample 6) were dosed into small containers and assessed for firmness, scoopability, and their general acceptability as ice cream in terms of their servability. Relative to the control (Sample B), Samples 2, 3, 5 and 6 were all found to have acceptable physical properties, indicating that they would be considered as equivalent to normal ice cream by consumers despite the elevated levels of amino acids and decreased level of total sugars.

*Organoleptic properties*

Organoleptic assessments were carried out on Sample B, Sample 6 and Sample 7. In these assessments, 9 experienced tasters consumed each of the samples and gave scores (on a scale of 0 to 10) for the crumbliness, hardness, firmness, iciness, smoothness, and coldness of the ice creams. The results are shown in Table 3.

Table 3: results of organoleptic assessments

| Parameter | Sample | | |
|---|---|---|---|
| | B | 6 | 7 |
| Crumbliness | 3.00 | 3.11 | 3.33 |
| Hardness | 7.00 | 4.33 | 6.66 |
| Firmness | 7.00 | 4.00 | 7.00 |
| Iciness | 2.00 | 4.22 | 3.11 |
| Smoothness | 7.00 | 6.22 | 6.33 |
| Coldness | 5.00 | 6.11 | 5.88 |

The results indicate that Sample 7 was almost indistinguishable from Sample B (control). Although Sample 6 diverged in terms of hardness and firmness, it was still found to be wholly acceptable and overall comparable to standard ice creams (including Sample B).

Example 2

Orange flavoured water ices were made according to the formulations in Table 4. Only the sucrose contributes to the specified total sugar content S (i.e. it does not include the maltodextrin, which is a mixture of polysaccharides).

Table 4: water ice formulations

| Ingredient (wt%) | Sample | | |
|---|---|---|---|
| | C | 8 | 9 |
| Sucrose | 14 | 7 | - |
| Citric acid | 0.6 | 0.6 | 0.6 |
| 7-10 DE MD | 8.5 | 8.5 | 8.5 |
| Proline | - | 1.075 | 2.125 |
| Alanine | - | 1.075 | 2.125 |

(continued)

| Ingredient (wt%) | Sample | | |
|---|---|---|---|
| | **C** | **8** | **9** |
| Serine | - | 1.075 | 2.125 |
| Glycine | - | 1.075 | 2.125 |
| LBG | 0.2 | 0.2 | 0.2 |
| Orange flavour | 0.15 | 0.15 | 0.15 |
| Water | 76.55 | 79.25 | 82.05 |
| TOTAL | 100 | 100 | 100 |
| Total sugars (*S*) | 14 | 7 | 0 |
| Amino acid (*A*) | 0 | 4.3 | 8.5 |

*Process*

The formulations were produced as 1 litre mixes according to the following method. Water at 80°C was added to a container and pre-blended sugars, amino acids (where present), stabilisers and acids were added to the water with mixing at 300 rpm for 10 min (using an overhead stirrer with pitch blade impeller; IKA Eurostar digital, Euro-ST D S2). Flavourings were then added, after which the temperature was raised to 79°C for 2 seconds to pasteurise the mix. Water loss due to evaporation was determined, and any water lost was replaced with the equivalent amount of boiling water which was added and mixed in with a spoon. The resultant mix was cooled in a fridge for about 4 hours, before being frozen in a stirred pot set up (rotating blade set to 50 rpm) until a temperature of -2.7°C ($\pm$1°C) was achieved. The frozen mixture was spooned into cartridges (pre-cooled to -5°C).

*Extrudability assessment*

The procedure outlined above was followed. The average loads (and standard deviations) are shown in Table 5.

Table 5: results of extrudability assessments

| Sample | Average load (N) | SD |
|---|---|---|
| **C** | 38.72 | 5.93 |
| **8** | 22.02 | 4.32 |
| **9** | 16.42 | 3.26 |

Once again, the presence of amino acids (in this case a mixture of proline, alanine, serine and glycine) was associated with a dramatic improvement in the extrudability of the frozen confection.

Example 3

Vanilla non-dairy ice creams were made according to the formulations in Table 6. The specified total sugar content (*S*) includes the sucrose and DE 28 (a mixture of monosaccharides, disaccharides and oligosaccharides); it does not include the maltodextrin (a mixture of polysaccharides). The oat and pea proteins did not contribute any sugars to the formulation. The specified amino acid content (*A*) is the amount of lysine provided by the lysine HCl (i.e. 1 g of lysine HCl provides 0.8 g of lysine, since lysine HCl is 80 wt% lysine and 20 wt% HCl).

Table 6: non-dairy ice cream formulations

| Ingredient (wt%) | Sample | | | |
|---|---|---|---|---|
| | **D** | **10** | **11** | **12** |
| Coconut oil | 5 | 5 | 5 | 5 |

(continued)

| Ingredient (wt%) | Sample | | | |
|---|---|---|---|---|
| | D | 10 | 11 | 12 |
| Pea protein | 0.65 | 0.65 | 0.65 | 0.65 |
| Oat protein | 0.93 | 0.93 | 0.93 | 0.93 |
| Sucrose | 12 | 10 | 8 | 6 |
| DE 28 | 2 | 1.8 | 1.6 | 1.4 |
| Lysine HCl | - | 1 | 2 | 3 |
| LBG | 0.15 | 0.15 | 0.15 | 0.15 |
| Guar gum | 0.15 | 0.15 | 0.15 | 0.15 |
| Kappa carrageenan | 0.015 | 0.015 | 0.015 | 0.015 |
| HP60 | 0.15 | 0.15 | 0.15 | 0.15 |
| HP70 (PS-222) | 0.15 | 0.15 | 0.15 | 0.15 |
| Vanilla flavour | 0.198 | 0.198 | 0.198 | 0.198 |
| Water | 78.607 | 79.807 | 81.007 | 82.207 |
| TOTAL | 100 | 100 | 100 | 100 |
| Total sugars ($S$) | 14 | 11.8 | 9.6 | 7.4 |
| Amino acid ($A$) | 0 | 0.8 | 1.6 | 2.4 |

*Process*

Dry sugars, amino acids (where present), stabilisers and emulsifiers were mixed together and then dispersed in hot water (80°C) with mixing at 250 rpm for 2 min (using an overhead stirrer with pitch blade impeller; IKA Eurostar digital, Euro-ST D S2). The mixing speed was increased to 450 rpm and the protein (oat protein + pea protein) added, followed by the coconut oil, and finally the vanilla flavour (with approximately 1 min stirring between each ingredient). Further mixing at 500 rpm for 10 min was carried out, after which the temperature was raised to 79°C and the mix pasteurised for 2 seconds. Water loss due to evaporation was determined, and any water lost was replaced with the equivalent amount of boiling water.

The resultant mix was homogenised using a two-stage bench top homogeniser. The first stage was at 450 bar and the second stage at 50 bar. The homogenised mix was then cooled in a fridge for about 12 hours, before being frozen for 20 minutes in a Taylor 104 benchtop scraped surface freezer with an overrun of around 43%. The frozen mixture was extruded into cartridges at a temperature of -3°C. The filled cartridges were placed in a blast freezer at -30°C for 2 hours, and then transferred to a storage freezer operating at -20°C.

*Ice content*

The ice content of the samples was determined according to the method set out above. All samples had an ice content of 75% ±1 at -18°C.

*Extrudability assessment*

Samples were removed from the storage freezer and placed in a Weiss cabinet at -5°C for 12 hours prior to the extrudability assessment. Filled cartridges were also held at a temperature of -5°C during the assessment to ensure that the ice cream was at the extrusion temperature of a typical scraped surface heat exchanger. The procedure described above was followed. The average loads (and standard deviations) are shown in Table 7. The results show that the presence of amino acids (in this case lysine) leads to a dramatic improvement in the extrudability of non-dairy ice cream.

Table 7: results of extrudability assessments

| Sample | Average load (N) | SD |
|--------|------------------|------|
| D | 69.35 | 1.69 |
| 10 | 56.23 | 3.61 |
| 11 | 49.00 | 4.72 |
| 12 | 35.07 | 2.91 |

*Organoleptic properties*

Organoleptic assessments were carried out on Sample D, Sample 10, Sample 11 and Sample 12. In these assessments, 4 experienced tasters consumed each of the samples and gave scores (on a scale of 0 to 10) for the crumbliness, hardness, firmness, iciness, smoothness, and coldness of the ice creams (served at -18°C). The results are shown in Table 8.

Table 8: results of organoleptic assessments

| Parameter | Sample | | | |
|-----------|------|------|------|------|
| | D | 10 | 11 | 12 |
| Crumbliness | 2.00 | 2.00 | 1.66 | 2.00 |
| Hardness | 5.00 | 4.88 | 5.00 | 5.00 |
| Firmness | 6.00 | 6.00 | 6.00 | 6.00 |
| Iciness | 6.00 | 6.33 | 6.00 | 7.33 |
| Smoothness | 4.00 | 4.00 | 4.11 | 5.00 |
| Coldness | 5.00 | 5.00 | 5.00 | 5.00 |

As can be seen from the results, there was very little difference observed between the samples. Although Sample 12 diverged in terms of iciness and smoothness, it was still found to be wholly acceptable and overall comparable to standard non-diary ice creams (including sample D).

Example 4

Lemon flavoured water ices were made according to the formulations in Table 9. Only the sucrose contributes to the specified total sugar content (i.e. it does not include the maltodextrin, which is a mixture of polysaccharides). The formulations were produced as 1 litre mixes according to the process described for Example 2.

Table 9: water ice formulations

| Ingredient (wt%) | Sample | |
|------------------|------|------|
| | E | 13 |
| Sucrose | 14 | 7 |
| Citric acid | 0.6 | 0.6 |
| 17-19 DE MD | 8.5 | 8.5 |
| Glycine-Glycine | - | 5 |
| LBG | 0.2 | 0.2 |
| Lemon flavour | 0.13 | 0.13 |
| Water | 76.57 | 78.57 |
| TOTAL | 100 | 100 |
| Total sugars ($S$) | 14 | 7 |

(continued)

| Ingredient (wt%) | Sample | |
|---|---|---|
| | E | 13 |
| Amino acid (A) | 0 | 5 |

*Extrudability assessment*

The procedure outlined above was followed. The average loads (and standard deviations) are shown in Table 10.

Table 10: results of extrudability assessments

| Sample | Average load (N) | SD |
|---|---|---|
| E | 23.16 | 2.83 |
| 13 | 18.71 | 1.88 |

Once again, the presence of amino acids (in this case a glycine-glycine dipeptide) was associated with an improvement in the extrudability of the frozen confection compared to the control.

**Claims**

1. A frozen confection comprising:

   • sugars in a total amount $S$, wherein $S$ is less than 21 wt%; and
   • amino acid monomers and dipeptides selected from alanine, glycine, lysine, proline, serine, and glycine-glycine dipeptide in a total amount $A$, wherein $A$ is at least 0.75 wt%.

2. The frozen confection as claimed in claim 1 wherein the combined amount of sugars and amino acid monomers and dipeptides $S + A$ in the frozen confection is 5 wt% to 23 wt%.

3. The frozen confection as claimed in claim 2 wherein $S + A$ is 7 wt% to 22 wt%, preferably 8 wt% to 21 wt%.

4. The frozen confection as claimed in any one of claims 1 to 3 wherein the $S$ is less than 20 wt%, preferably less than 18 wt%, more preferably less than 15 wt%.

5. The frozen confection as claimed in any one of claims 1 to 4 wherein $A$ is 1 wt% to 20 wt%, preferably 2 wt% to 15 wt%.

6. The frozen confection as claimed in any one of claims 1 to 5 wherein the amino acid monomers and dipeptides are amino acid monomers selected from: arginine, lysine, and proline.

7. The frozen confection as claimed in claim 6 wherein the amino acid monomer is proline.

8. The frozen confection as claimed in any one of claims 1 to 7 wherein the frozen confection is an ice cream comprising milk protein.

9. The frozen confection as claimed in any one of claims 1 to 7 wherein the frozen confection is a non-dairy ice cream, preferably comprising pea protein, oat protein, soy protein, or a mixture thereof.

10. The frozen confection as claimed in any one of claims 1 to 7 wherein the frozen confection is a water ice.

**Patentansprüche**

1. Gefrorenes Konfekt, umfassend:

• Zucker in einer Gesamtmenge **S,** wobei **S** weniger als 21 Gew.-% ist; und
• Aminosäure-Monomere und Dipeptide, ausgewählt unter Alanin, Glycin, Lysin, Prolin, Serin und Glycin-Glycin-dipeptid in einer Gesamtmenge **A,** wobei **A** mindestens 0,75 Gew.-% beträgt.

**2.** Gefrorenes Konfekt, wie im Anspruch 1 beansprucht, wobei die kombinierte Menge von Zuckern und Aminosäure-Monomeren und Dipeptiden **S + A** in dem gefrorenen Konfekt 5 Gew.-% bis 23 Gew.-% beträgt.

**3.** Gefrorenes Konfekt, wie im Anspruch 2 beansprucht, wobei **S + A** 7 Gew.-% bis 22 Gew.-%, vorzugsweise 8 Gew.-% bis 21 Gew.-% beträgt.

**4.** Gefrorenes Konfekt, wie in irgendeinem der Ansprüche 1 bis 3 beansprucht, wobei das **S** weniger als 20 Gew.-%, vorzugsweise weniger als 18 Gew.-%, bevorzugter weniger als 15 Gew.-%, beträgt.

**5.** Gefrorenes Konfekt, wie in irgendeinem der Ansprüche 1 bis 4 beansprucht, wobei **A** 1 Gew.-% bis 20 Gew.-%, vorzugsweise 2 Gew.-% bis 15 Gew.-%, beträgt.

**6.** Gefrorenes Konfekt, wie in irgendeinem der Ansprüche 1 bis 5 beansprucht, wobei die Aminosäure-Monomere und Dipeptide Aminosäure-Monomere sind, ausgewählt unter Arginin, Lysin und Prolin.

**7.** Gefrorenes Konfekt, wie im Anspruch 6 beansprucht, wobei das Aminosäure-Monomer Prolin ist.

**8.** Gefrorenes Konfekt, wie in irgendeinem der Ansprüche 1 bis 7 beansprucht, wobei das gefrorene Konfekt eine Eiscreme ist, die Milchprotein umfasst.

**9.** Gefrorenes Konfekt, wie in irgendeinem der Ansprüche 1 bis 7 beansprucht, wobei das gefrorene Konfekt eine milchfreie Eiscreme ist, vorzugsweise umfassend Erbsenprotein, Haferprotein, Sojaprotein oder eine Mischung davon.

**10.** Gefrorenes Konfekt, wie in irgendeinem der Ansprüche 1 bis 7 beansprucht, wobei das gefrorene Konfekt ein Wassereis ist.

**Revendications**

**1.** Confiserie glacée comprenant :

• des sucres dans une quantité totale S, où *S* est inférieur à 21 % en masse ; et
• des monomères d'acides aminés et des dipeptides choisis parmi l'alanine, la glycine, la lysine, la proline, la sérine, et un dipeptide de glycine-glycine dans une quantité totale A, où *A* est d'au moins 0,75 % en masse.

**2.** Confiserie glacée selon la revendication 1, où la quantité combinée de sucres et de monomères d'acides aminés et de dipeptides *S + A* dans la confiserie glacée est de 5 % en masse à 23 % en masse.

**3.** Confiserie glacée selon la revendication 2, où *S + A* est de 7 % en masse à 22 % en masse, de préférence de 8 % en masse à 21 % en masse.

**4.** Confiserie glacée selon l'une quelconque des revendications 1 à 3, où la *S* est inférieure à 20 % en masse, de préférence inférieure à 18 % en masse, encore mieux inférieure à 15 % en masse.

**5.** Confiserie glacée selon l'une quelconque des revendications 1 à 4, où *A* est de 1 % en masse à 20 % en masse, de préférence de 2 % en masse à 15 % en masse.

**6.** Confiserie glacée selon l'une quelconque des revendications 1 à 5, où les monomères d'acides aminés et dipeptides sont des monomères d'acides aminés choisis parmi : l'arginine, la lysine, et la proline.

**7.** Confiserie glacée selon la revendication 6, où le monomère d'acide aminé est la proline.

**8.** Confiserie glacée selon l'une quelconque des revendications 1 à 7, où la confiserie glacée est une crème glacée comprenant une protéine de lait.

9. Confiserie glacée selon l'une quelconque des revendications 1 à 7, où la confiserie glacée est une crème glacée non-laitière, comprenant de préférence une protéine de pois, protéine d'avoine, protéine de soja, ou un mélange de celles-ci.

10. Confiserie glacée selon l'une quelconque des revendications 1 à 7, où la confiserie glacée est une glace à l'eau.

# Fig. 1a

# Fig. 1b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6299914 B

- CN 101416677

**Non-patent literature cited in the description**

- **H. DOUGLAS GOFF ; RICHARD W. HARTEL.** Ice Cream. Kluwer Academic/Plenum Publishers, 2013